(19)

Europäisches Patentamt

European Patent Office

Office européen des brevets

(11) **EP 4 601 271 A1**

(12) **EUROPEAN PATENT APPLICATION**
published in accordance with Art. 153(4) EPC

(43) Date of publication:
**13.08.2025 Bulletin 2025/33**

(21) Application number: **22962961.3**

(22) Date of filing: **24.10.2022**

(51) International Patent Classification (IPC):
**H04L 69/12** (2022.01)   **G06F 40/151** (2020.01)

(52) Cooperative Patent Classification (CPC):
**G06F 40/151; H04L 69/12**

(86) International application number:
**PCT/CN2022/127044**

(87) International publication number:
**WO 2024/086973 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **LI, Lei
Shenzhen, Guangdong 518129 (CN)**

• **CHENG, Baochuan
Shenzhen, Guangdong 518129 (CN)**
• **DUAN, Xiaoxiang
Shenzhen, Guangdong 518129 (CN)**
• **YU, Xiaoan
Shenzhen, Guangdong 518129 (CN)**
• **ZHANG, Yunji
Shenzhen, Guangdong 518129 (CN)**
• **HU, Shuming
Shenzhen, Guangdong 518129 (CN)**

(74) Representative: **Maiwald GmbH
Engineering
Elisenhof
Elisenstrasse 3
80335 München (DE)**

(54) **DATA PROCESSING METHOD AND APPARATUS, AND INTELLIGENT DRIVING DEVICE**

(57)   A data processing method and apparatus, and an intelligent driving device are provided. The method is applied to a computing platform, and includes: obtaining an information format protocol file of a sensor; automatically generating a metamodel of the sensor based on the information format protocol file of the sensor, where the metamodel indicates information that needs to be extracted when data from the sensor is parsed; and storing the metamodel. According to the foregoing method, the computing platform can quickly obtain data of the sensor and extract corresponding information by using the metamodel, to perform data processing.

400

```
┌─────────────────────────────────────────────────────────────┐
│ S401: Obtain an information format protocol file of a sensor  │
└─────────────────────────────────────────────────────────────┘
                              │
┌─────────────────────────────────────────────────────────────┐
│ S402: Automatically generate a metamodel of the sensor based  │
│ on the information format protocol file of the sensor, where  │
│ the metamodel indicates information that needs to be          │
│ extracted when data from the sensor is parsed                 │
└─────────────────────────────────────────────────────────────┘
                              │
┌─────────────────────────────────────────────────────────────┐
│              S403: Store the metamodel                         │
└─────────────────────────────────────────────────────────────┘
```

FIG. 4

EP 4 601 271 A1

## Description

### TECHNICAL FIELD

This application relates to the intelligent driving field, and more specifically, to a data processing method and apparatus, and an intelligent driving device.

### BACKGROUND

Currently, autonomous driving technologies have emerged as a new development direction for future vehicles, and is gaining increasing popularity. In the autonomous driving field, electronic control units (electronic control units, ECUs) such as a sensor and an actuator of a vehicle play an important role. A basis for implementing the autonomous driving technologies is that an autonomous driving system of the vehicle quickly accesses data of the sensor and the actuator and the data fulfills functions.

However, currently, no unified standard is formed for a sensor signal format in the industry. As a result, signal formats customized by sensor manufacturers vary greatly. This hinders the vehicle from quickly obtaining sensor data. In addition, in a process of obtaining the sensor data, different sensor format protocols need to be manually translated, and then the sensor data is parsed in a manual hard decoding manner and is provided for a computing platform for use. Consequently, the manner of obtaining the sensor data is inefficient and costly.

### SUMMARY

This application provides a data processing method and apparatus, and an intelligent driving device, so that the intelligent driving device can quickly obtain sensor data, to perform data processing.

According to a first aspect, a data processing method is provided. The method is applied to a computing platform, and the method includes: obtaining an information format protocol file of a sensor; automatically generating a metamodel of the sensor based on the information format protocol file of the sensor, where the metamodel indicates information that needs to be extracted when data from the sensor is parsed; and storing the metamodel.

The computing platform may be a device on which a sensor is installed, or a computing unit of the device. For example, the device on which the sensor is installed may be an industrial robot, a smartwatch, or an intelligent driving device.

Optionally, the computing platform may be a mobile data center (mobile data center, MDC).

In this application, the information format protocol file of the sensor may be converted into the metamodel, and the metamodel is stored in the computing platform. In this manner, the computing platform can quickly extract corresponding information from obtained sensor data by using the metamodel, to perform data processing. In addition, the method may further convert information format protocol files of different sensors into a unified metamodel, thereby avoiding manual translation of the information format protocol files of the sensors and greatly reducing labor costs.

With reference to the first aspect, in some implementations of the first aspect, the method further includes: obtaining first data from the sensor; and processing the first data by using the metamodel to obtain second data, where the second data is used by the computing platform to perform intelligent computing.

The first data may be original data collected by the sensor. Because the computing platform cannot directly use the first data, the first data needs to be converted into the second data by using the metamodel for use by the computing platform.

Optionally, when the computing platform is an intelligent driving device or a computing unit in the intelligent driving device, the second data may be data used for autonomous driving computing.

In this application, the first data collected by the sensor may be converted into the second data by using the metamodel for use by the computing platform. In this way, the computing platform can quickly obtain sensor data and extract corresponding information by using the metamodel, to perform data processing.

With reference to the first aspect, in some implementations of the first aspect, the information format protocol file includes a packet description, the packet description includes a packet identifier and at least one information description, and each of the at least one information description is used to identify one type of information corresponding to the packet identifier. Each of the at least one information description includes at least one of the following information: an information identifier, an information name, an information length, an information start bit, a byte order, a data type mark, a precision factor, or a value range.

The packet identifier may further include a packet name, and the byte order may also be referred to as big-endian and little-endian (big endian and little endian) or information big-endian and little-endian in this application. The data type marker may indicate whether data is positive or negative in binary.

Optionally, the type of information corresponding to the packet identifier may include one or more of the following content: a longitude, a latitude, an altitude, a roll angle significant bit, a roll angle, a pitch angle, an azimuth angle, a linear velocity, and a satellite quantity.

With reference to the first aspect, in some implementations of the first aspect, the processing the first data by using the metamodel to obtain second data includes: obtaining the packet identifier in the first data; obtaining the metamodel based on the packet identifier; and processing the first data by using the metamodel to obtain the second data.

In this application, a corresponding metamodel may be determined based on the packet identifier in the first data, so that the first data can be processed by using the metamodel, to obtain the second data.

With reference to the first aspect, in some implementations of the first aspect, the automatically generating a metamodel of the sensor based on the information format protocol file of the sensor includes: reading the packet description from the information format protocol file to obtain the at least one information description; and for each of the at least one information description, determining, based on the information start bit in the information description, a first memory space of first information corresponding to the information description; determining a bit offset of the first information based on an initial byte of the first information, where the bit offset is used to determine a start bit of the first information in the first memory space; determining a content mask of the first information based on a placeholder length of the first information in the first memory space and the bit offset; obtaining, based on the first memory space, the placeholder length, and the content mask, a storage model corresponding to the information description; and determining the metamodel based on the storage model corresponding to each of the at least one information description.

In this application, the computing platform may determine, by using the first memory space, the placeholder length, and the content mask of the first information, the storage model of the information description corresponding to the first information. Based on a same manner, the computing platform may determine the storage model corresponding to each of the at least one information description, and determine the metamodel based on the storage model corresponding to each information description.

In this way, the computing platform can quickly extract corresponding information from obtained sensor data by using the metamodel.

In this application, the first memory space may be referred to as a first memory address, that is, an address covered by information in a packet.

With reference to the first aspect, in some implementations of the first aspect, the method further includes: generating an information registration result based on a user request, where the information registration result includes an information name; and before the determining, based on an information start bit in the information description, a first memory space of first information corresponding to the information description, the method further includes: determining that an information name corresponding to the first information has been registered.

In this application, when the information name corresponding to the first information has been registered, the computing platform may determine the first memory space of the first information based on the information name, to determine the metamodel based on the first memory space. In other words, the computing platform determines only a memory space of registered information, and does not process unregistered information, to save storage resources of the computing platform.

With reference to the first aspect, in some implementations of the first aspect, the method further includes: storing the second data in a shared memory pool, where data in the shared memory pool is used by the computing platform to perform intelligent computing.

In this application, after obtaining the second data by using the metamodel, the computing platform may store the second data in the shared memory pool, so that the second data can be used at any time when the computing platform performs intelligent computing.

According to a second aspect, a data processing apparatus is provided. The apparatus includes: an obtaining unit and a processing unit. The obtaining unit is configured to obtain an information format protocol file of a sensor. The processing unit is configured to: automatically generate a metamodel of the sensor based on the information format protocol file of the sensor, where the metamodel indicates information that needs to be extracted when data from the sensor is parsed; and store the metamodel.

With reference to the second aspect, in some implementations of the second aspect, the obtaining unit is further configured to obtain first data from the sensor. The processing unit is further configured to process the first data by using the metamodel to obtain second data. The second data is used by a computing platform to perform intelligent computing.

With reference to the second aspect, in some implementations of the second aspect, the information format protocol file includes a packet description, the packet description includes a packet identifier and at least one information description, each of the at least one information description is used to identify one type of information corresponding to the packet identifier. Each of the at least one information description includes at least one of the following information: an information identifier, an information name, an information length, an information start bit, a byte order, a data type mark, a precision factor, or a value range.

With reference to the second aspect, in some implementations of the second aspect, the processing unit is configured to: obtain the packet identifier in the first data; obtain the metamodel based on the packet identifier; and process the first data by using the metamodel to obtain the second data.

With reference to the second aspect, in some implementations of the second aspect, the processing unit is configured to: read the packet description from the information format protocol file to obtain the at least one information description; for each of the at least one information description, determine, based on the information start bit in the information description, a first memory space of first information corresponding to the information description; determine a bit offset of the first information based on an initial byte of the first information, where the bit offset is used to determine a start bit of the first information in the first memory space; determine a content mask of the first information based on a placeholder length of the first information in the first memory space and the bit offset; obtain, based on the first memory space, the placeholder length, and the content mask, a storage model corresponding to the information description; and determine the metamodel based on the storage model corresponding to each of the at least one information description.

With reference to the second aspect, in some implementations of the second aspect, the processing unit is further configured to: generate an information registration result based on a user request, where the information registration result includes an information name; and determine that an information name corresponding to the first information has been registered.

With reference to the second aspect, in some implementations of the second aspect, the processing unit is further configured to store the second data in a shared memory pool. Data in the shared memory pool is used by the computing platform to perform intelligent computing.

According to a third aspect, a data processing apparatus is provided. The apparatus includes at least one processor and a memory. The at least one processor is coupled to the memory, and is configured to read and execute instructions in the memory, to enable the apparatus to implement the method in any implementation of the first aspect.

According to a fourth aspect, a computer-readable medium is provided. The computer-readable medium stores program code, and when the computer program code is run on a computer, the computer is enabled to perform the method in any implementation of the first aspect.

According to a fifth aspect, a chip is provided. The chip includes a circuit, and the circuit is configured to perform the method in any implementation of the first aspect.

According to a sixth aspect, an intelligent driving device is provided, including the data processing apparatus in any implementation of the second aspect and one or more sensors.

With reference to the sixth aspect, in some implementations of the sixth aspect, the intelligent driving device is a vehicle.

**BRIEF DESCRIPTION OF DRAWINGS**

FIG. 1 is a diagram of an access process of a sensor signal according to an embodiment of this application;
FIG. 2 is a functional diagram of an intelligent driving device according to an embodiment of this application;
FIG. 3 shows a system architecture to which a data processing method is applicable according to an embodiment of this application;
FIG. 4 is a schematic flowchart of a data processing method according to an embodiment of this application;
FIG. 5A and FIG. 5B are a schematic flowchart of a data processing method according to an embodiment of this application;
FIG. 6 is a diagram of an information format protocol of a sensor according to an embodiment of this application;
FIG. 7 is a diagram of a metamodel of a sensor according to an embodiment of this application;
FIG. 8A and FIG. 8B are a flowchart of converting an information format protocol file of a sensor into a metamodel according to an embodiment of this application;
FIG. 9A to FIG. 9C are a flowchart of a method for completing data processing by accessing a metamodel for sensor data according to an embodiment of this application;
FIG. 10 is a flowchart of a method by using which a computing platform obtains sensor data processed by using a metamodel according to an embodiment of this application;
FIG. 11 is a diagram of a data processing apparatus according to an embodiment of this application; and
FIG. 12 is a diagram of a data processing apparatus according to an embodiment of this application.

**DESCRIPTION OF EMBODIMENTS**

In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

The prefix words "first", "second", and the like in embodiments of this application are merely intended to distinguish between different described objects, and impose no limitation on locations, sequences, priorities, quantities, content, or the like of the described objects. In embodiments of this application, use of a prefix word, such as an ordinal number, used to distinguish between described objects does not constitute a limitation on the described objects. For a description of the described objects, refer to the description of the context in the claims or embodiments. The use of such a prefix word should not constitute an unnecessary limitation.

Currently, an autonomous driving technology has emerged as a new development direction for future vehicles, and is gaining increasing popularity. In the autonomous driving field, ECUs such as a sensor and an actuator of a vehicle play an important role. A basis for implementing the autonomous driving technology is that an autonomous driving system of the vehicle quickly accesses data of the sensor and the actuator and the data fulfills functions.

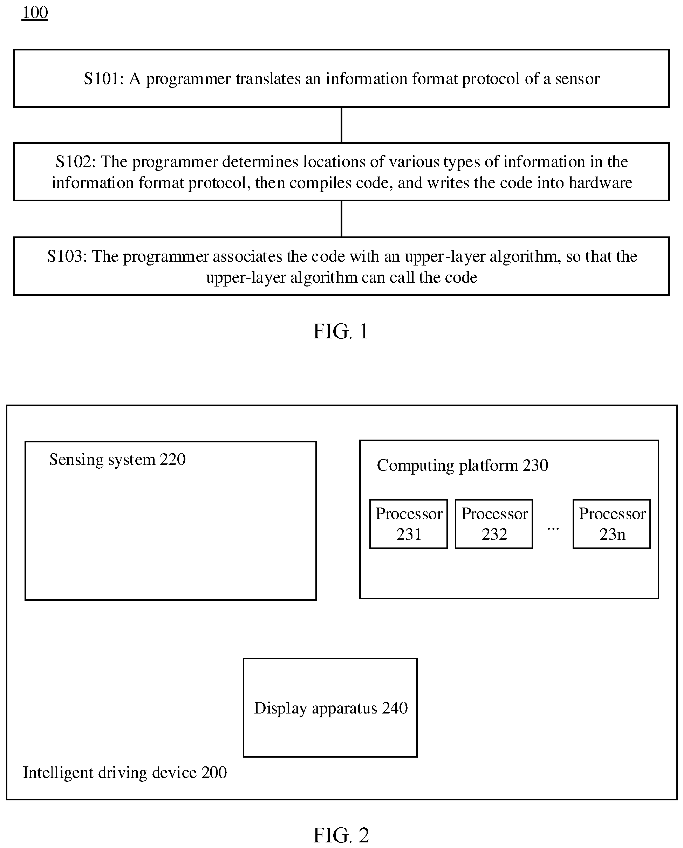

However, currently, no unified standard is formed for a sensor signal format in the industry. As a result, it is difficult for a vehicle to quickly obtain sensor data. For example, FIG. 1 shows an access process of a sensor signal. The process mainly includes S101 to S103.

S101: A programmer translates an information format protocol of a sensor.

S102: The programmer determines locations of various types of information in the information format protocol, then compiles code, and writes the code into hardware.

S103: The programmer associates the code with an upper-layer algorithm, so that the upper-layer algorithm can call the code.

Specifically, after parsing the code, the programmer outputs obtained data to the upper-layer algorithm for use, to complete sensor data fusion, so that a vehicle implements an autonomous driving function.

It can be learned that, in this method, information format protocols of different sensors are manually translated, and then a sensor access problem is resolved by using a manual hard coding technology. This method mainly has the following disadvantages.

(1) Few: The method supports only a small quantity of sensors developed in advance and cannot implement flexible adaptation of sensors. In other words, "plug-and-play" cannot be implemented for the sensors.

(2) Slow: The method requires manual hard coding to complete signal parsing of a sensor, and a development period is long.

(3) False: There is no unified model or standard for sensor development in the method, and quality of the sensor development cannot be ensured.

(4) Disordered: The method does not support sensor update iteration. Because the autonomous driving technology is currently in an evolution phase, each sensor has a lot of changes, and a problem of repeated sensor development is likely to occur.

(5) Expensive: In this method, a large amount of code needs to be newly added when a sensor is connected, resulting in high commercial code review costs.

To resolve the foregoing problems, embodiments of this application provide a data processing method and apparatus, and an intelligent driving device, so that the intelligent driving device can quickly obtain sensor data, to perform data processing. The following describes technical solutions of embodiments in this application with reference to accompanying drawings.

FIG. 2 is a functional diagram of an intelligent driving device 200 according to an embodiment of this application. It should be understood that FIG. 2 and related descriptions are merely examples, and do not limit the intelligent driving device in this embodiment of this application.

In an implementation process, the intelligent driving device 200 may be configured to be in a full or partial autonomous driving mode, or may be manually driven by a user. For example, the intelligent driving device 200 may obtain ambient environment information of the device by using a sensing system 220; and obtain an autonomous driving policy by analyzing the environment information, to implement full autonomous driving; or present an analysis result to the user, to implement partial autonomous driving.

The intelligent driving device 200 may include a plurality of subsystems, for example, the sensing system 220, a computing platform 230, and a display apparatus 240. Optionally, the intelligent driving device 200 may include more or fewer subsystems, and each subsystem may include one or more components. In addition, each subsystem and component of the intelligent driving device 200 may implement interconnection in a wired or wireless manner.

The sensing system 220 may include several types of sensors configured to sense the ambient environment information of the intelligent driving device 200. For example, the sensing system 220 may include a positioning system.

The positioning system may be a global positioning system (global positioning system, GPS), a BeiDou system, or another positioning system. The sensing system 220 may include one or more of an inertia measurement unit (inertial measurement unit, IMU), a lidar, a millimeter wave radar, an ultrasonic radar, and a camera apparatus.

Some or all functions of the intelligent driving device 200 may be controlled by the computing platform 230. The computing platform 230 may include processors 231 to 23n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field-programmable gate array (field-programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). Moreover, the computing platform 230 may further include a memory. The memory is configured to store instructions. Some or all of the processors 232 to 23n may invoke the instructions in the memory, to implement a corresponding function.

The computing platform 230 may control functions of the intelligent driving device 200 based on inputs received from various subsystems (for example, the sensing system 220). In some embodiments, the computing platform 230 may be configured to provide control over a plurality of aspects of the intelligent driving device 200 and its subsystems.

The foregoing components are merely examples. During actual application, the components in the foregoing modules may be added or removed based on an actual requirement. FIG. 2 should not be construed as a limitation on this embodiment of this application.

The intelligent driving device 200 that is traveling on a road may recognize an object in the ambient environment of the intelligent driving device, to determine to adjust a current speed. The object may be another vehicle, a traffic control device, or another type of object. In some examples, each recognized object may be independently considered, and a speed to be adjusted by the intelligent driving device 200 may be determined based on a feature of each object, for example, a current speed, an acceleration, and a distance between the object and the intelligent driving device 200.

Optionally, the intelligent driving device 200 or a sensing and computing device (for example, the computing platform 230) associated with the intelligent driving device 200 may predict behavior of an identified object based on a feature and a state of an ambient environment (for example, traffic, rain, ice on a road, and the like) of the identified object. Optionally, all identified objects depend on behavior of each other, and therefore all the identified objects may be considered together to predict behavior of a single identified object.

The intelligent driving device 200 in this application may include a transportation tool on a road, a transportation tool on water, an air transportation tool, an industrial device, an agricultural device, an entertainment device, or the like. For example, the intelligent driving device 200 may be a vehicle. The vehicle is a vehicle in a broad sense, and may be a transportation tool (such as a commercial vehicle, a passenger vehicle, a motorcycle, a flying vehicle, or a train), an industrial vehicle (such as a forklift, a trailer, or a tractor), an engineering vehicle (such as an excavator, a bulldozer, or a crane), an agricultural device (such as a lawn mower or a harvester), a recreation device, or a toy vehicle, and a type of the vehicle is not specifically limited in this embodiment of this application. For another example, the intelligent driving device 200 may be a transportation tool such as an airplane or a ship.

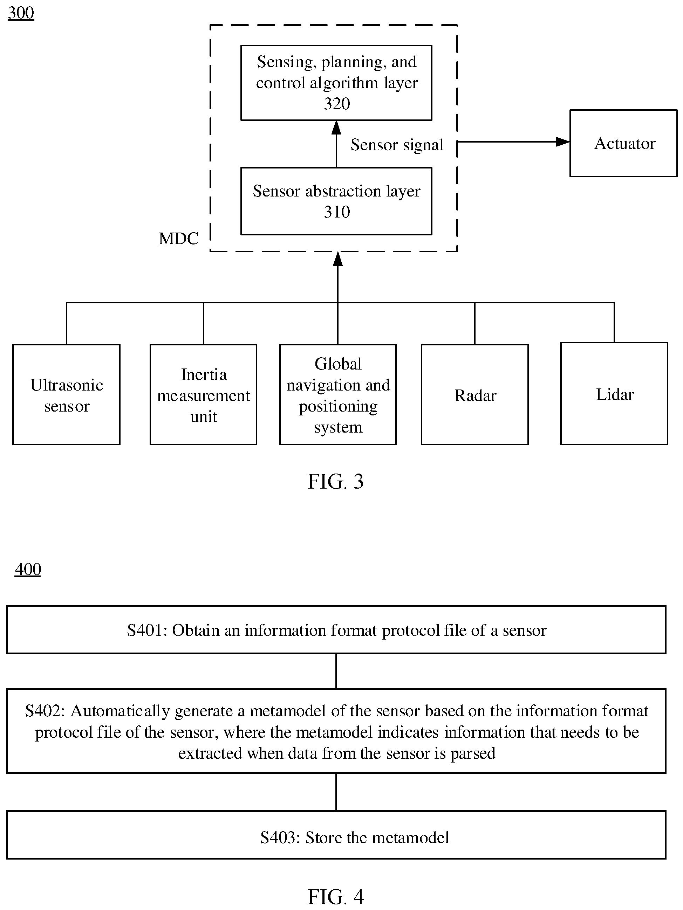

The following uses an example in which an intelligent driving device is a vehicle to describe a technical problem that needs to be resolved in this application and a technical solution used in this application. The vehicle includes a system architecture shown in FIG. 3.

FIG. 3 shows the system architecture to which a data processing method is applicable according to an embodiment of this application. The system architecture 300 may be used in the intelligent driving device 200. The system architecture 300 includes an MDC, a plurality of sensors, and an actuator. The MDC shown in FIG. 3 may be the computing platform 230 in the intelligent driving device 200, and the plurality of sensors may belong to the sensing system 220 shown in FIG. 2.

As shown in FIG. 3, the MDC may include a sensor abstraction layer 310 and a sensing, planning, and control algorithm layer 320. The sensor abstraction layer 310 obtains data collected by the sensor, generates a corresponding sensor signal based on the collected data, and sends the generated sensor signal to the sensing, planning, and control algorithm layer 320. The sensing, planning, and control algorithm layer 320 performs sensor data fusion processing based on the sensor signal, to implement autonomous driving functions such as sensing, planning, and control. The sensor may include one or more of an ultrasonic sensor, an inertia measurement unit, a global navigation and positioning system, a radar (radar), and a lidar (lidar).

According to the data processing method provided in this embodiment of this application, the MDC can quickly obtain information obtained by the sensor, so as to quickly perform multi-sensor data fusion processing to obtain an execution policy, and send the execution policy to the actuator. In this way, the actuator executes the policy, so that an intelligent vehicle implements the autonomous driving function. FIG. 3 includes a plurality of sensors. To enable the MDC to quickly identify data of different types of sensors, this application provides a data processing method.

FIG. 4 is a schematic flowchart of a data processing method according to an embodiment of this application. The method 400 may be performed by the intelligent driving device 200 in FIG. 2, or may be performed by the computing platform 230 in the intelligent driving device 200, or may be performed by a system-on-chip (system-on-chip, SoC) in the computing platform 230, or may be performed by the processor in the computing platform 230, or may be performed by the MDC in FIG. 3. The following describes the method 400 by using a computing platform as an execution body. The method 400 may include steps S401 to S403.

S401: The computing platform obtains an information format protocol file of a sensor.

The computing platform may be a device on which a sensor is installed or a computing unit of the device. The device may be, for example, an industrial robot, a smartwatch, or an intelligent driving device.

Optionally, the computing platform may be the MDC in FIG. 3.

Optionally, the information format protocol file includes a packet description, the packet description includes a packet identifier and at least one information description, and each of the at least one information description is used to identify one type of information corresponding to the packet identifier. Each of the at least one information description includes at least one of the following information: an information identifier, an information name, an information length, an information start bit, a byte order, a data type mark, a precision factor, or a value range. The packet identifier may further include a packet name, and the byte order may also be referred to as big-endian and little-endian (big endian and little endian) or information big-endian and little-endian in this application. The data type marker may indicate whether data is positive or negative in binary.

Optionally, the type of information corresponding to the packet identifier may include one or more of the following content: a longitude, a latitude, an altitude, a roll angle significant bit, a roll angle, a pitch angle, an azimuth angle, a linear velocity, and a satellite quantity.

S402: The computing platform automatically generates a metamodel of the sensor based on the information format protocol file of the sensor, where the metamodel indicates information that needs to be extracted when data from the sensor is parsed.

In an embodiment, that the computing platform automatically generates a metamodel of the sensor based on the information format protocol file of the sensor includes: reading the packet description from the information format protocol file to obtain the at least one information description; for each of the at least one information description, determining, based on the information start bit in the information description, a first memory space of first information corresponding to the information description; determining a bit offset of the first information based on an initial byte of the first information, where the bit offset is used to determine a start bit of the first information in the first memory space; determining a content mask of the first information based on a placeholder length of the first information in the first memory space and the bit offset; obtaining, based on the first memory space, the placeholder length, and the content mask, a storage model corresponding to the information description; and determining the metamodel based on the storage model corresponding to each of the at least one information description. Based on a same manner, the computing platform may determine the storage model corresponding to each of the at least one information description, and determine the metamodel based on the storage model corresponding to each information description, so that the computing platform can quickly extract corresponding information from obtained sensor data by using the metamodel.

In this application, the first memory space may be referred to as a first memory address, that is, an address covered by information in a packet.

In an embodiment, the method 400 further includes: The computing platform generates an information registration result based on a user request. The information registration result includes an information name. Before the computing platform determines, based on the information start bit in the information description, the first memory space of the first information corresponding to the information description, the method 400 further includes: The computing platform determines that an information name corresponding to the first information has been registered. In this way, when the information name corresponding to the first information has been registered, the computing platform may determine the first memory space of the first information based on the information name, to determine the metamodel based on the first memory space. In other words, the computing platform determines only a memory space of registered information, and does not process unregistered information, to save storage resources of the computing platform.

S403: The computing platform stores the metamodel.

In this embodiment of this application, the information format protocol file of the sensor may be converted into the metamodel, and the metamodel is stored in the computing platform. In this manner, the computing platform can quickly extract the corresponding information from the obtained sensor data by using the metamodel, to perform data processing.

In addition, the method may further convert information format protocol files of different sensors into a unified metamodel, thereby avoiding manual translation of the information format protocol files of the sensors and greatly reducing labor costs.

In an embodiment, after step S403, the method further includes: obtaining first data from the sensor; and processing the first data by using the metamodel to obtain second data, where the second data is used by the computing platform to perform intelligent computing.

The first data may be original data collected by the sensor. Because the computing platform cannot directly use the first data, the first data needs to be converted into the second data by using the metamodel for use by the computing platform.

Optionally, when the computing platform is an intelligent driving device or belongs to an intelligent driving device, the second data may be data used for autonomous driving computing. Intelligent driving includes assisted driving, autonomous driving, and self-driving.

In this embodiment of this application, the first data collected by the sensor may be converted into the second data by using the metamodel for use by the computing platform. In this way, the computing platform can quickly obtain the sensor data and extract the corresponding information by using the metamodel, to perform data processing.

In an embodiment, that the computing platform processes the first data by using the metamodel to obtain the second data includes: The computing platform obtains the packet identifier in the first data; obtains the metamodel based on the packet identifier; and processes the first data by using the metamodel to obtain the second data.

In this embodiment of this application, the corresponding metamodel may be determined based on the packet identifier in the first data, so that the first data can be processed by using the metamodel to obtain the second data.

In an embodiment, the method 400 further includes: The computing platform stores the second data in a shared memory pool. Data in the shared memory pool is used by the computing platform to perform intelligent computing.

In this embodiment of this application, after obtaining the second data by using the metamodel, the computing platform may store the second data in the shared memory pool, so that the second data can be used at any time when the computing platform performs intelligent computing.

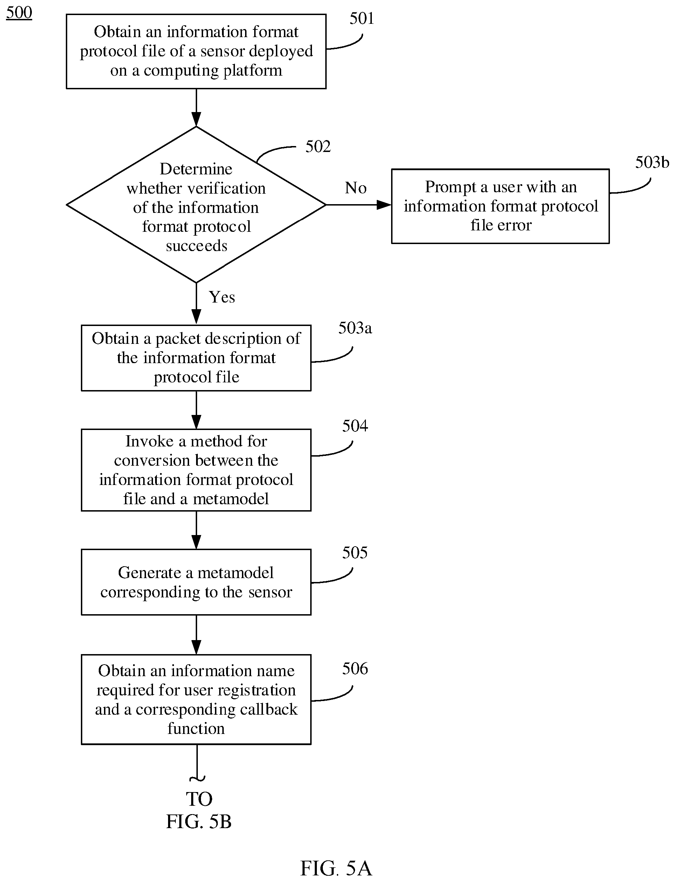

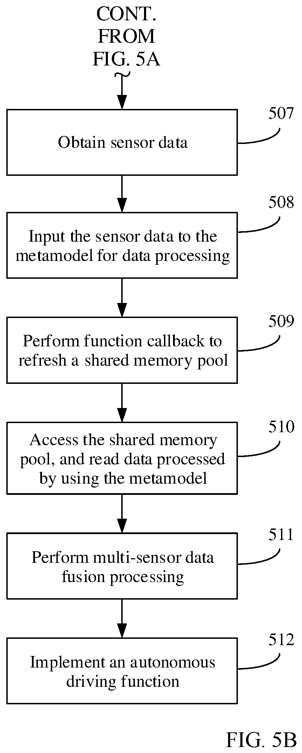

FIG. 5A and FIG. 5B are a schematic flowchart of a data processing method according to an embodiment of this application. The method 500 may be performed by the intelligent driving device 200 in FIG. 2, or may be performed by the computing platform 230 in the intelligent driving device 200, or may be performed by a system-on-chip SoC in the computing platform 230, or may be performed by the processor in the computing platform 230, or may be performed by the MDC in FIG. 3. The method 500 may be a detailed description of steps S401 to S403 in the method 400 and steps performed after step S403. The method 500 may include steps S501 to S512.

S501: Obtain an information format protocol file of a sensor deployed on a computing platform.

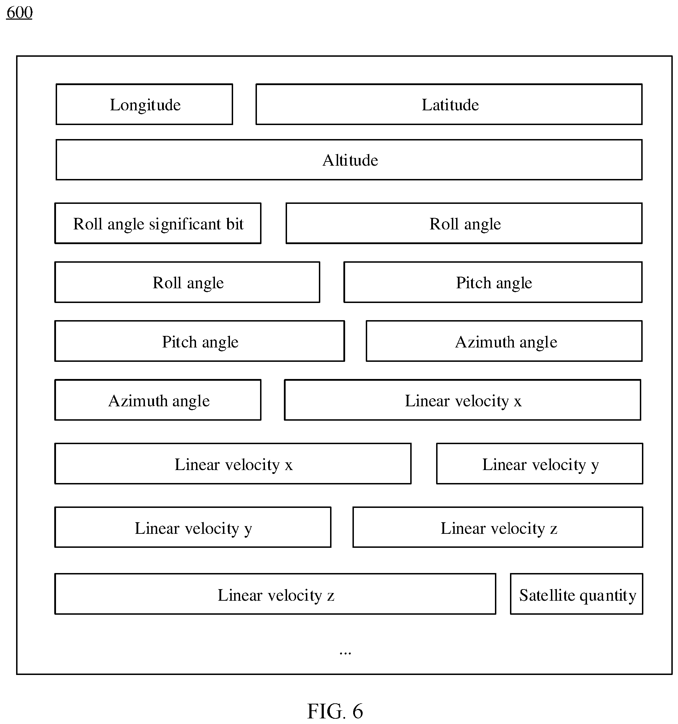

The information format protocol file may be an information format protocol file of a global navigation satellite system (global navigation satellite system, GNSS) or an IMU sensor shown in FIG. 6. In a method 100, the information format protocol file can only be manually read and translated, and then a program is hard coded and written. In step S501, the computing platform may obtain the information format protocol file of the deployed sensor, and load the information format protocol file, to convert the information format protocol file into a unified metamodel.

It should be understood that content of the information format protocol file of the sensor shown in FIG. 6 is merely an example for description, and specific content of the information format protocol file may be set and adjusted by a vehicle manufacturer based on a model of the sensor. The content of the information format protocol file of the sensor shown in FIG. 6 may be information corresponding to the packet identifier in the method 500.

S502: Determine whether verification of the information format protocol file succeeds.

Specifically, if the check of the information format protocol file succeeds, step S503a is performed. Otherwise, step S503b is performed.

S503a: Obtain a packet description of the information format protocol file.

Specifically, after the packet description is obtained, step S504 may be performed. The packet description may include a packet identifier and at least one information description.

Optionally, the packet identifier may include a packet name and a packet ID.

Optionally, the information description may include at least one of the following information: an information identifier, an information name, an information length, an information start bit, a byte order, a data type mark, a precision factor, or a value range.

S503b: Prompt a user with an information format protocol file error.

Specifically, the user may be prompted with the information format protocol file error by using a prompt box on a vehicle-mounted display, or the user may be prompted with the information format protocol file error by using a speaker device in a vehicle in a voice broadcast manner.

S504: Invoke a method for conversion between the information format protocol file and a metamodel.

In this step, information format protocol files of different types of sensors (an IMU, a radar, a GNSS, an ultrasonic sensor (USS), or the like), or information format protocol files based on different communication protocol files, or information format protocol files of sensors defined by different manufacturers can all be converted into metamodels of sensors. Time consumed for conversion may be quite short (for example, 5 milliseconds). A conversion process may be as follows:

(1) The computing platform loads the information format protocol file and extracts the information description. Information in the information description is grouped based on the packet ID (a packet of each sensor has a unique ID header), and then the information in the information description is classified into different packet IDs (each information name in each packet is unique).

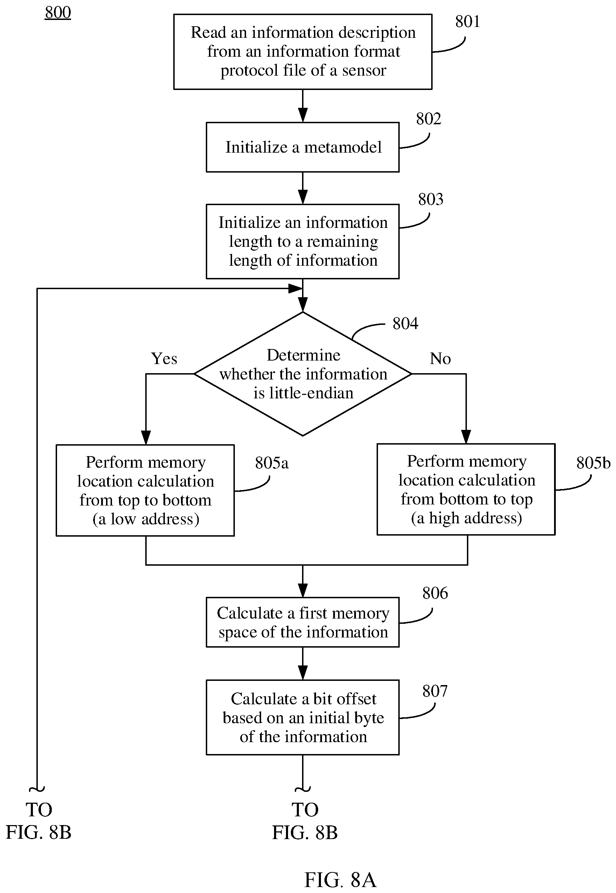

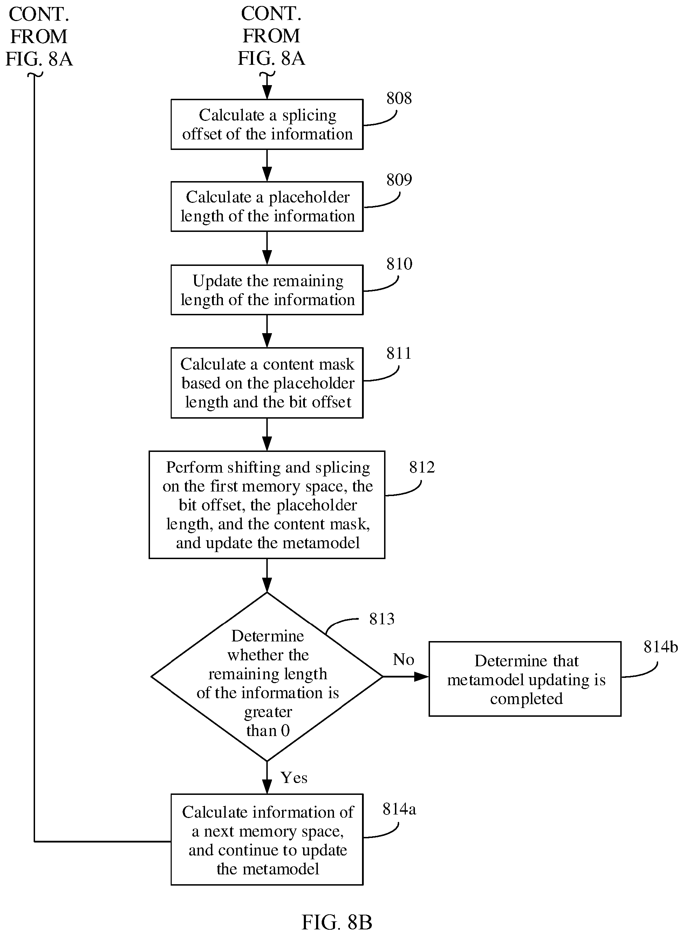

(2) The computing platform calculates and converts the information under the packet ID one by one to obtain a metamodel. A specific calculation method is described in FIG. 8A and FIG. 8B.

S505: Generate a metamodel corresponding to the sensor.

Specifically, after step S504 is performed, the computing platform can automatically generate the metamodel of the sensor based on the information format protocol file of the sensor. Step S505 may be corresponding to step S402 in the method 400.

S506: Obtain an information name required for user registration and corresponding function callback.

For example, the function callback may be a function called by using a function pointer. By way of performing the function callback, a shared memory pool can be refreshed, to obtain data processed by the metamodel.

S507: Obtain sensor data.

The sensor data may be the first data in the method 400.

S508: Input the sensor data to the metamodel for data processing.

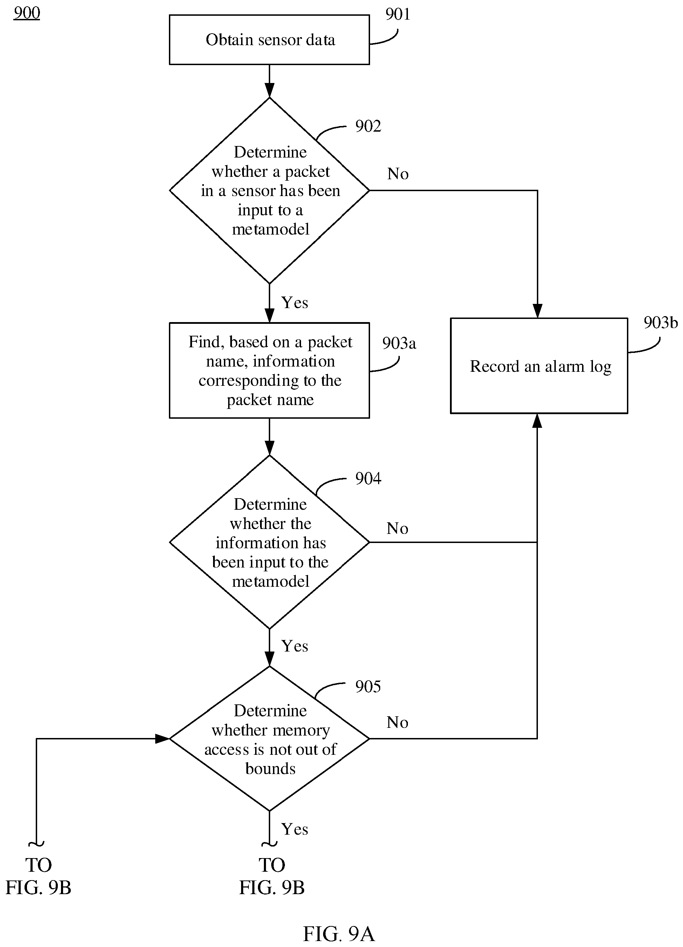

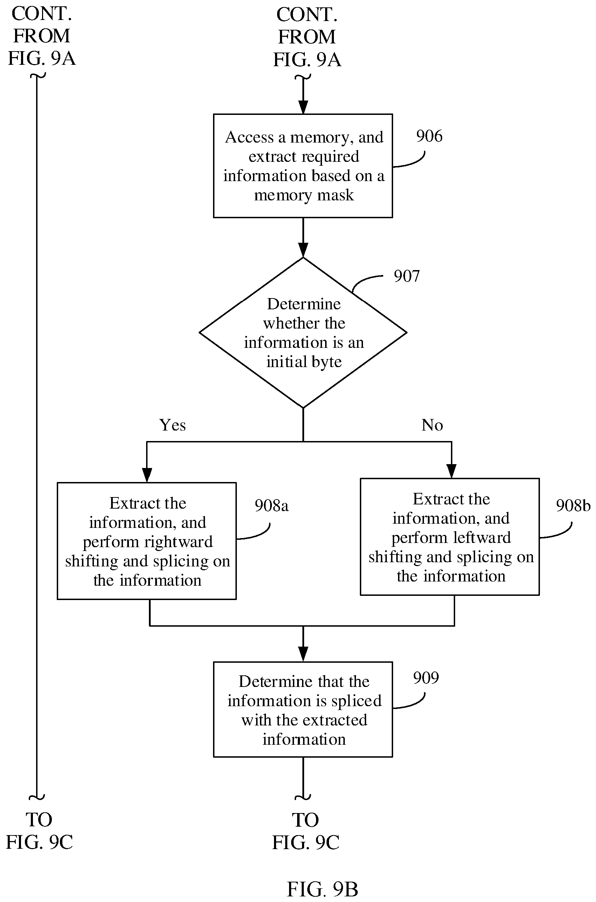

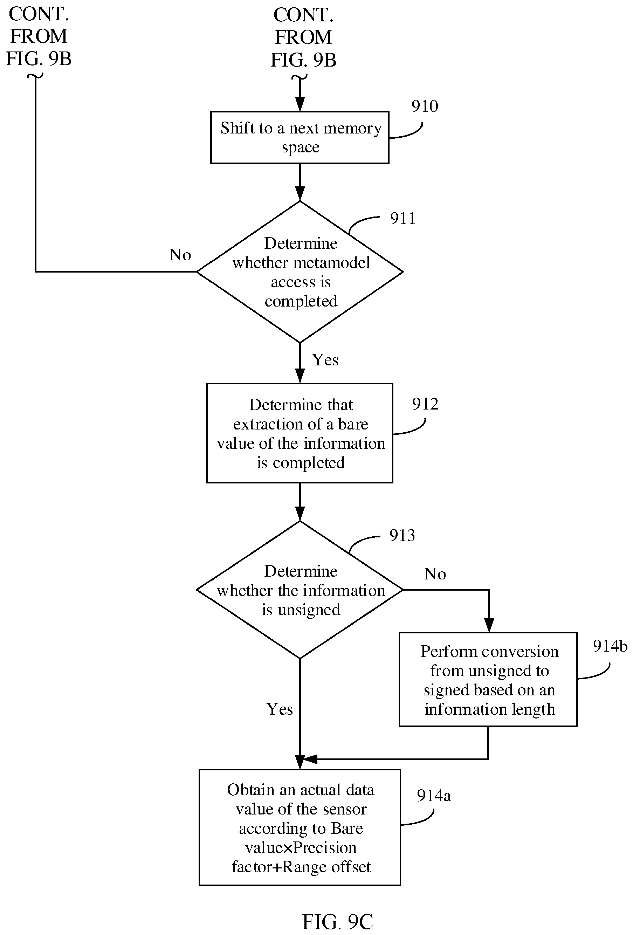

A specific data processing process is described in detail in FIG. 9A to FIG. 9C. Step S508 may be a process of converting the first data into the second data by using the metamodel in the method 400.

S509: Perform function callback to refresh the shared memory pool.

The shared memory pool may be a chunk of memory pre-determined in the computing platform, and the sensor data obtained through metamodel processing may be stored in the shared memory pool. By way of performing the function callback, the shared memory pool can be refreshed, to obtain the sensor data processed by the metamodel.

S510: Access the shared memory pool, and read data processed by using the metamodel.

S511: Perform multi-sensor data fusion processing.

S512: Implement an autonomous driving function.

In this embodiment of this application, corresponding information may be quickly extracted from obtained sensor data by using the metamodel, to quickly perform multi-sensor data fusion processing, so that an intelligent vehicle implements the autonomous driving function.

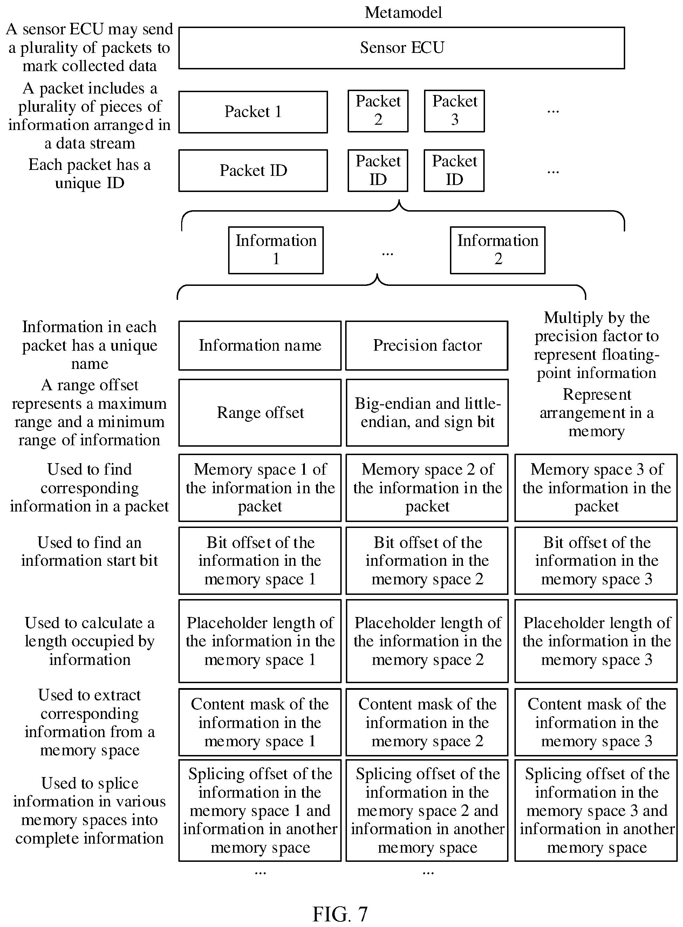

FIG. 7 is a diagram of a metamodel of a sensor according to an embodiment of this application. The metamodel may be the metamodel applied in the methods 400 and 500.

As shown in FIG. 7, a sensor ECU may send a plurality of packets (for example, a packet 1 to a packet 3) to represent collected data. Each packet may have a unique ID, and each packet may include one or more pieces of information. The one or more pieces of information is arranged in a data stream. The one or more pieces of information may have one or more of the following: an information name, a precision factor, a range offset, information big-endian and little-endian and a sign bit, and a memory space n (for example, a memory space 1 to a memory space 3) of information in a packet, a bit (bit) offset of the information in the memory space n, a placeholder length of the information in the memory space n, a content mask of the information in the memory space n, and a splicing offset of the information in the memory space n and information in another memory space. The foregoing content may be the content included in the information description of the method 400.

Multiplying by the precision factor may represent floating-point information, the range offset may represent a maximum range and a minimum range of the information in the memory space n, the information big-endian and little-endian and the sign bit may represent arrangement of the information in the memory space n, corresponding information may be found from the packet in the memory space n of the information in the packet, a start bit of the information may be found in the bit offset of the information in the memory space n, and a length occupied by the information may be calculated based on the placeholder length of the information in the memory space n, corresponding information may be extracted from the memory space n based on the content mask of the information in the memory space n, and different information in different memory spaces can be spliced into complete information based on the splicing offset of the information in the memory space n and information in another memory space.

It should be understood that the information big-endian and little-endian may be referred to as a byte order in the method 400, and the memory space n may be the first memory space in the method 400. When the memory space n is the memory space 1, the another memory space may be the memory space 2 and/or the memory space 3.

The following uses a metamodel corresponding to a GNSS-type sensor as an example to describe a structure of the metamodel in another manner.

The structure of the metamodel corresponding to the GNSS-type sensor is as follows:

- MsgID: 0x101      --- packet ID

sigName: "longitude"      --- information name

isBigEndian: true      --- big-endian or not

isUnsigned: true      --- unsigned or not

sigFactor: 0.002      --- precision factor

sigOffset: 100      --- range offset

byteOffset: 15      --- memory space 1 of information in a packet

bitOffset: 3         --- bit offset of the information in the memory space 1

holdBitLen: 5         --- placeholder length of the information in the memory space 1

getMask: 0xF8         --- content mask of the information in the memory space 1

shiftOffset: 3      --- splicing offset of the information in the memory space 1 and information in another memory space

byteOffset: 14         --- memory space 2 of the information in the packet

bitOffset: 0         --- bit offset of the information in the memory space 2

holdBitLen: 8         --- placeholder length of the information in the memory space 2

getMask: 0xFF          --- content mask of the information in the memory space 2

shiftOffset: 5          --- splicing offset of the information in the memory space 2 and information in another memory space

byteOffset: 13         --- memory space 3 of the information in the packet

bitOffset: 0         --- bit offset of the information in the memory space 3

holdBitLen: 4         --- placeholder length of the information in the memory space 3

getMask: 0x0F          --- content mask of the information in the memory space 3

shiftOffset: 13          --- splicing offset of the information in the memory space 3 and information in another memory space

sigName: "longitudeVld" --- information name

isBigEndian: true --- big-endian or not

isUnsigned: true --- unsigned or not

sigFactor: 1 --- precision factor

sigOffset: 0                --- range offset

byteOffset: 14      --- memory space 1 of the information in the packet

bitOffset: 4          --- bit offset of the information in the memory space 1

holdBitLen: 1          --- placeholder length of the information in the memory space 1

getMask: 0x80 --- content mask of the information in the memory space 1

shiftOffset: 4          --- splicing offset of the information in the memory space 1 and information in another memory space

- MsgID: 0x103                        --- packet ID

sigName: "sdVelocity"             --- information name

isBigEndian: true          --- big-endian or not

isUnsigned: true          --- unsigned or not

sigFactor: 0.0001 --- precision factor

sigOffset: –60                --- range offset

byteOffset: 28             --- memory space 1 of the information in the packet

bitOffset: 0 --- bit offset of the information in the memory space 1

holdBitLen: 8 --- placeholder length of the information in the memory space 1

getMask: 0xFF --- content mask of the information in the memory space 1

shiftOffset: 0 --- splicing offset of the information in the memory space 1 and information in another memory space

byteOffset: 27 --- memory space 2 of the information in the packet

bitOffset: 0 --- bit offset of the information in the memory space 2

holdBitLen: 8 --- placeholder length of the information in the memory space 2

getMask: 0xFF --- content mask of the information in the memory space 2

shiftOffset: 8 --- splicing offset of the information in the memory space 2 and information in another memory space

sigName: "sdAttitude" --- information name

isBigEndian: true --- big-endian or not

isUnsigned: true --- unsigned or not

sigFactor: 0.002 --- precision factor

sigOffset: –100 --- range offset

byteOffset: 26 --- memory space 1 of the information in the packet

bitOffset: 3 --- bit offset of the information in the memory space 1

holdBitLen: 3 --- placeholder length of the information in the memory space 1

getMask: 0x07 --- content mask of the information in the memory space 1

shiftOffset: 3 --- splicing offset of the information in the memory space 1 and information in another memory space

After the metamodel is determined by using the foregoing information description, sensor data may be processed based on the metamodel.

FIG. 8A and FIG. 8B are a flowchart of converting an information format protocol file of a sensor into a metamodel according to an embodiment of this application. A method 800 may be an implementation of step S504 in the method 500, and the method 800 may include steps S801 to S814.

S801: Read an information description from the information format protocol file of the sensor.

Optionally, the information description may include at least one of the following information: an information identifier, an information name, an information length, an information start bit, a byte order, a data type mark, a precision factor, or a value range.

S802: Initialize the metamodel.

S803: Initialize the information length to a remaining length of the information.

Specifically, the process may be understood as a value assignment process, that is, the remaining information length is used as a current information length.

S804: Determine whether information is little-endian. If the information is the little-endian, step S805a is performed. Otherwise, step S805b is performed.

For example, the little-endian may be understood as that a high byte of the sensor data is stored in a high address of a memory, and a low byte of the data is stored in a low address of the memory.

S805a: Perform memory location calculation from top to bottom (the low address).

S805b: Perform memory location calculation from bottom to top (the high address).

S806: Calculate a first memory space of the information.

For example, the first memory space may be the memory space n of the information in the packet in FIG. 7.

S807: Calculate a bit offset based on an initial byte of the information.

For example, the bit offset may be used to determine a start bit of the information in the first memory space.

S808: Calculate a splicing offset of the information.

S809: Calculate a placeholder length of the information.

For example, the placeholder length may be a placeholder length of the information in the first memory space.

S810: Update the remaining length of the information.

S811: Calculate a content mask based on the placeholder length and the bit offset.

S812: Perform shifting and splicing on the first memory space, the bit offset, the placeholder length, and the content mask, and update the metamodel.

The shifting and splicing may be understood as splicing information in the first memory space to obtain complete information. In the method 400, this step may be a process of generating the storage model corresponding to the information description.

S813: Determine whether the remaining information length is greater than 0, and if the remaining information length is greater than 0, perform step S814a. Otherwise, perform step S814b.

S814a: Calculate a next memory space, and continue to update the metamodel (that is, repeat step S804).

S814b: Determine that metamodel updating is completed.

In this embodiment of this application, the information format protocol file may be converted into the metamodel based on the information description in the information format protocol file, so that a computing platform can quickly extract corresponding information from obtained sensor data by using the metamodel.

FIG. 9A to FIG. 9C are a flowchart of a method for completing data processing by accessing a metamodel for sensor data according to an embodiment of this application. The method 900 may be an implementation of step S508 in the method 500, and the method 900 may include steps S901 to S914.

S901: Obtain the sensor data.

The sensor data may be the first data in the method 400.

S902: Determine whether a packet in the sensor data has been input to the metamodel.

Specifically, it may be determined, based on a packet ID, whether the packet has been input to the metamodel. If the packet has been input to the metamodel, step S903a is performed. Otherwise, step S903b is performed.

S903a: Find, based on a packet name, information corresponding to the packet name.

S903b: Record an alarm log.

S904: Determine whether the information has been input to the metamodel.

Specifically, it may be determined, based on an information name, whether the information has been input to the metamodel. If the information has been input to the metamodel, step S905 is performed. Otherwise, step S903b is performed.

S905: Determine whether memory access is not out of bounds. If memory access is not out of bounds, perform step S906. Otherwise, perform step S903b.

Out-of-bounds memory access may be understood as follows: A user applied for a chunk of memory from a computing platform before, and during actual use of the memory, the application range of the user is exceeded.

S906: Access the memory, and extract required information based on a memory mask.

The extracting the information may be understood as that the computing platform extracts the information from the packet and processes the information.

S907: Determine whether the information is an initial byte. If the information is the initial byte, perform step S908a. Otherwise, perform step S908b.

S908a: Extract the information, and perform rightward shifting and splicing on the information.

Specifically, the rightward shifting and splicing may be understood as shifting the information to the right by a corresponding bit in one or more memory spaces.

S908b: Extract the information, and perform leftward shifting and splicing on the information.

Specifically, the leftward shifting and splicing may be understood as shifting the information to the left by a corresponding bit in one or more memory spaces.

S909: Determine that the information is spliced with the extracted information.

Specifically, this step may be understood as extracting information from different memory spaces and splicing the information into complete information.

S910: Shift to a next memory space.

S911: Determine whether metamodel access is completed. If metamodel access is completed, step S912 is performed. Otherwise, step S905 is performed again.

S912: Determine that extraction of a bare value of the information is completed.

S913: Determine whether the information is unsigned.

If the information is unsigned, step S914a is performed. Otherwise, step S914b is performed.

S914a: Determine an actual data value of the sensor based on the following formula (1):

$$\text{Actual data value of the sensor} = \text{Bare value} \times \text{Precision factor} + \text{Range offset} \quad (1)$$

The actual data value of the sensor may be the second data in the method 400.

S914b: Perform conversion from unsigned to signed based on an information length.

In this embodiment of this application, when the sensor data accesses the metamodel, the metamodel can combine information in different memory spaces into complete information, to obtain an actual data value of the sensor data. In this manner, manual translation of the information format protocol file of the sensor and manual hard coding are avoided, thereby greatly reducing labor costs.

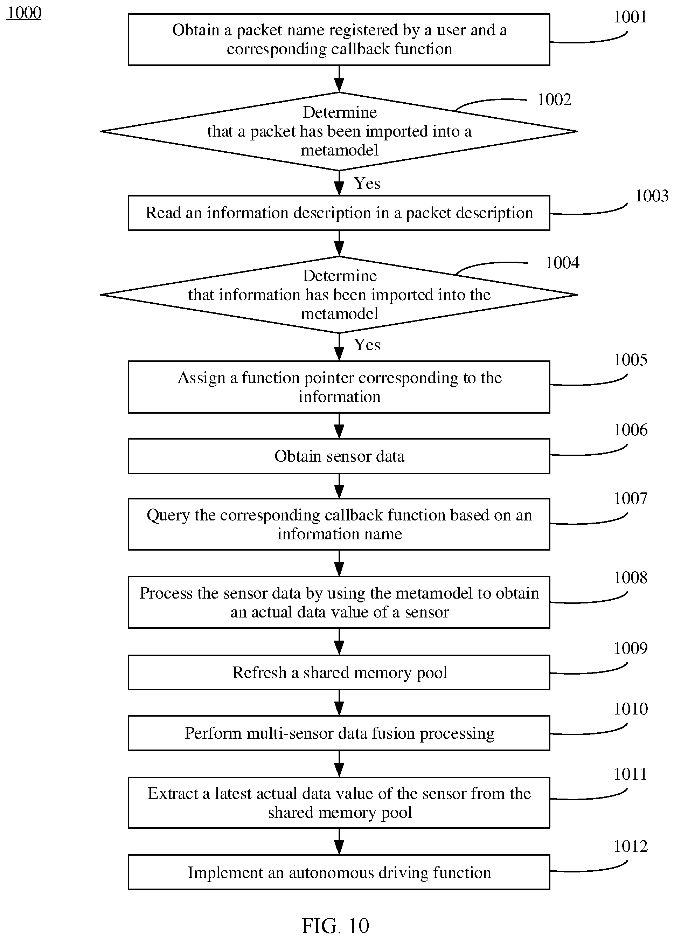

The following describes, with reference to FIG. 10, how a computing platform obtains data processed by using a metamodel. First, three interfaces are described.

(1) Conventional information format protocol file interface (interface 1):

```
        bool LoadDbcFile (const std::string &filePath);
        /*************************************************************
        * Function description: load the conventional
information format protocol file interface
and read information descriptions such as an information name and a start bit.
        * Input parameters:
        * filePath: a path of a conventional
information format protocol file on a computing
        platform.
        * Return value: if the information
format protocol file is read and verified successfully,
        return true; or otherwise, return false.
**************************************************************/
```

(2) Application programming interface (application programming interface, API) (interface 2) of the actual data value of the sensor:

```
        template <typename OutputType>
        bool GetSig(OutputType &outValue, const std::uint32_t &msgId, const std::string
&sigName,
                    const std::uint8_t* const buf, const std::size_t &bufLen) const;
        template <typename OutputType, std::size_t bufLen>
        bool GetSig(OutputType &outValue, const std::uint32_t &msgId, const std::string
&sigName,
                    const std::uint8_t (&buf)[bufLen]) const
                    JH 3k sk she she st si se ke she
ste st sk se she she st si sk ke she ste si sks she ste st si ssl she
sts skosleske sks si sok sk ste si skosleske ste sk
skool ste sts skokosk stot skokokokokoskoskokok kok skokok
        * Function description: to enter a memory (buffer) space of a sensor packet and a
        required information name, and return the actual data value to the sensor.
        * Input parameters:
        * noutValue: to return the actual data value of the sensor parsed from the metamodel
to
 a user for use.
        * msgId: a packet ID in which information is located.
        * sigName: an information name required by the user.
        * buf: a start address of the memory space in which the information is located.
        * bufLen: a length of the memory space in which the information is located.
        * Return value: true is returned if the metamodel successfully parses sensor data;
or
        false is returned if the metamodel fails to parse the sensor data.
**************************************************************/
```

(3) Interface (interface 3) of information required for user registration and corresponding function callback:

```
            typedef void(*RefreshSigBufPtr)(SigBuf* sigBuf, const uint32_t &bufLen);
              void RegisterCallBack(const uint32_t &msgId, const std::string &sigName,
              RefreshSigBufPtr refreshSigBufPtr);
              JH 3k sk she she st si se ke she ste st sk se she she
    st si sk ke she ste si sks she ste st si ssl she sts skosleske
     sks si sok sk ste si skosleske ste sk skool ste sts skokosk stot skokokokokoskoskokok kok skokok
              * Function description: the user registers required information; after receiving the
     actual data value of the sensor, the computing platform immediately calls back a function
     registered by the user, to update a shared memory pool; then when the computing platform needs
     to perform fusion on the sensor data, the computing platform obtains a latest actual information
     value of the sensor from the shared memory pool.
              * Input parameters:
              * sigBuf: a start address of the shared memory pool.
              * bufLen: a length of the shared memory pool.
              * msgId: the packet ID in which the information is located.
              * sigName: the information name required by the user.
              * refreshSigBufPtr: a callback pointer of the function
    registered by the user, where this
              pointer is used to trigger callback and refresh data in the shared memory pool.
              * Return value: NA.
     ************************************************************************/
```

The user can select, based on a requirement of the user, the foregoing interfaces to use through combination, so as to control a data access mode. The following two scenarios are involved:

Scenario 1:

The computing platform uses the interface 1 and the interface 2 to obtain the sensor data processed by the metamodel. This manner of obtaining the sensor data may also be referred to as active obtaining.

Scenario 2:

The computing platform uses the interface 1 and the interface 3 to obtain the sensor data processed by the metamodel, that is, triggers function callback to refresh the shared memory pool. When multi-sensor fusion is required, the computing platform may obtain the data processed by the metamodel from the shared memory pool. This manner of obtaining the sensor data may also be referred to as passive obtaining.

With reference to FIG. 10, the following describes in detail a detailed process in which the computing platform obtains the sensor data in a manner of refreshing the shared memory pool through function callback.

FIG. 10 is a flowchart of a method by using which a computing platform obtains sensor data processed by using a metamodel according to an embodiment of this application. The method 1000 may be performed after the method 400, the method 500, or the method 900. The method 1000 may include steps S1001 to S1012.

S1001: Obtain a packet name registered by a user and corresponding function callback.

S1002: Determine that the packet has been imported into the metamodel.

Specifically, whether the packet has been imported into the metamodel may be determined by using a packet ID in a packet description.

S1003: Read an information description in the packet description.

Optionally, the information description may include at least one of the following information: an information identifier, an information name, an information length, an information start bit, a byte order, a data type mark, a precision factor, or a value range.

S1004: Determine that information has been imported into the metamodel.

Specifically, whether the information has been imported into the metamodel may be determined by using the information identifier and/or the information name in the information description.

S1005: Assign a function pointer corresponding to the information.

S1006: Obtain the sensor data.

For example, the sensor data may be the first data in the method 400.

S1007: Query the corresponding function callback based on the information name.

S1008: Process the sensor data by using the metamodel to obtain the actual data value of a sensor.

For example, the actual data value may be the second data in the method 400.

S1009: Refresh the shared memory pool.

For example, function callback may be triggered to refresh the shared memory pool.

S1010: Perform multi-sensor data fusion processing.

S1011: Extract a latest actual data value of the sensor from the shared memory pool.

S1012: Implement an autonomous driving function.

In this embodiment of this application, after obtaining the actual data value of the sensor by using the metamodel, the computing platform may store the actual data value of the sensor in the shared memory pool, so that the actual data value can be used at any time when the computing platform performs multi-sensor fusion.

An embodiment of this application further provides an apparatus configured to implement any one of the foregoing methods. The apparatus includes units configured to implement steps performed by the intelligent driving device 200 in any one of the foregoing methods.

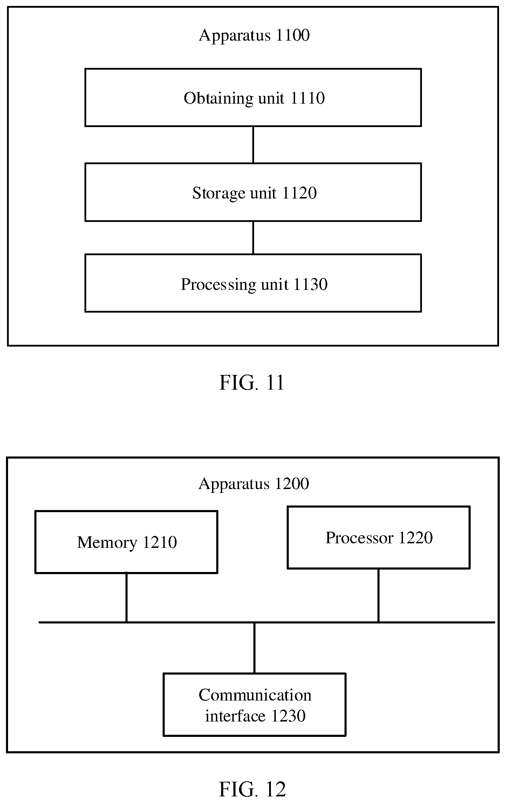

FIG. 11 is a diagram of a data processing apparatus 1100 according to an embodiment of this application. The apparatus 1100 may include an obtaining unit 1110, a storage unit 1120, and a processing unit 1130. The obtaining unit 1110 is configured to obtain instructions and/or data. The obtaining unit 1110 may also be referred to as a communication interface or a communication unit. The storage unit 1120 is configured to implement a corresponding storage function, and store corresponding instructions and/or data. The processing unit 1130 is configured to perform data processing. The processing unit 1130 may read instructions and/or data in the storage unit, so that the apparatus 1100 implements the foregoing data processing method.

In an implementation, the obtaining unit 1110 is configured to obtain an information format protocol file of a sensor. The processing unit 1130 is configured to automatically generate a metamodel of the sensor based on the information format protocol file of the sensor, where the metamodel indicates information that needs to be extracted when data from the sensor is parsed; and store the metamodel.

In a possible implementation, the obtaining unit 1110 is further configured to obtain first data from the sensor. The processing unit 1130 is further configured to process the first data by using the metamodel to obtain second data. The second data is used by the computing platform to perform intelligent computing.

In a possible implementation, the information format protocol file includes a packet description, the packet description includes a packet identifier and at least one information description, and each of the at least one information description is used to identify one type of information corresponding to the packet identifier. Each of the at least one information description includes at least one of the following information: an information identifier, an information name, an information length, an information start bit, a byte order, a data type mark, a precision factor, or a value range.

In a possible implementation, the processing unit 1130 is configured to: obtain the packet identifier in the first data; obtain the metamodel based on the packet identifier; and process the first data by using the metamodel to obtain the second data.

In a possible implementation, the processing unit 1130 is configured to: read the packet description from the information format protocol file to obtain the at least one information description; for each of the at least one information description, determine, based on the information start bit in the information description, a first memory space of first information corresponding to the information description; determine a bit offset of the first information based on an initial byte of the first information, where the bit offset is used to determine a start bit of the first information in the first memory space; determine a content mask of the first information based on a placeholder length of the first information in the first memory space and the bit offset; obtain, based on the first memory space, the placeholder length, and the content mask, a storage model corresponding to the information description; and determine the metamodel based on the storage model corresponding to each of the at least one information description.

In a possible implementation, the processing unit 1130 is further configured to: generate an information registration result based on a user request, where the information registration result includes an information name; and determine that an information name corresponding to the first information has been registered.

In a possible implementation, the processing unit 1130 is further configured to store the second data in a shared memory pool. Data in the shared memory pool is used by the computing platform to perform intelligent computing.

Optionally, if the apparatus 1100 is located in the intelligent driving device 200, the processing unit 1130 may be the processor 231 shown in FIG. 2.

FIG. 12 is a diagram of another data processing apparatus 1200 according to an embodiment of this application. The apparatus 1200 may be used in the intelligent driving device 200 in FIG. 2.

The data processing apparatus 1200 includes a memory 1210, a processor 1220, and a communication interface 1230. The memory 1210, the processor 1220, and the communication interface 1230 are connected through an internal connection path. The memory 1210 is configured to store instructions. The processor 1220 is configured to execute the instructions stored in the memory 1210, to control the communication interface 1230 to obtain information, or enable the data processing apparatus to perform the data processing method in the foregoing embodiments. Optionally, the memory 1210 may be coupled to the processor 1220 through an interface, or may be integrated with the processor 1220.

It should be noted that the communication interface 1230 uses a transceiver apparatus such as but not limited to a transceiver. The communication interface 1230 may further include an input/output interface (input/output interface).

The processor 1220 stores one or more computer programs, and the one or more computer programs include instructions. When the instructions are run by the processor 1220, the data processing apparatus 1200 is enabled to perform the data processing method in the foregoing embodiments.

In an implementation process, the steps of the foregoing method may be performed by using an integrated logic circuit of hardware in the processor 1220 or instructions in a form of software. The method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1210. The processor 1220 reads information from the memory 1210, and performs the steps of the foregoing method in combination with hardware of the processor. To avoid repetition, details are not described herein again.

Optionally, the communication interface 1230 in FIG. 12 may implement the obtaining unit 1110 in FIG. 11, the memory 1210 in FIG. 12 may implement the storage unit 1120 in FIG. 11, and the processor 1220 in FIG. 12 may implement the processing unit 1130 in FIG. 11.

Optionally, the apparatus 1100 or the apparatus 1200 may be a computing platform, and the computing platform may be a vehicle-mounted computing platform or a cloud computing platform.

Optionally, the apparatus 1100 or the apparatus 1200 may be located in the intelligent driving device 200 in FIG. 2.

Optionally, the apparatus 1100 or the apparatus 1200 may be the computing platform 230 in the intelligent driving device in FIG. 2.

An embodiment of this application further provides a system. The system includes a computing platform and one or more sensors. The computing platform may include the apparatus 1100 or the apparatus 1200.

An embodiment of this application further provides a server. The server includes the apparatus 1100 or the apparatus 1200.

An embodiment of this application further provides an intelligent driving device. The intelligent driving device may include the apparatus 1100 or the apparatus 1200 and one or more sensors.

Optionally, the intelligent driving device is a vehicle.

An embodiment of this application further provides a computer-readable medium. The computer-readable medium stores program code, and when the computer program code is run on a computer, the computer is enabled to perform any one of the methods in FIG. 4, FIG. 5A and FIG. 5B, or FIG. 8A and FIG. 8B to FIG. 10.

An embodiment of this application further provides a chip, including a circuit. The circuit is configured to perform any one of the methods in FIG. 4, FIG. 5A and FIG. 5B, and FIG. 8A and FIG. 8B to FIG. 10.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A data processing method, wherein the method is applied to a computing platform, and the method comprises:

    obtaining an information format protocol file of a sensor;
    automatically generating a metamodel of the sensor based on the information format protocol file of the sensor, wherein the metamodel indicates information that needs to be extracted when data from the sensor is parsed; and
    storing the metamodel.

2.  The method according to claim 1, wherein the method further comprises:

    obtaining first data from the sensor; and
    processing the first data by using the metamodel to obtain second data, wherein the second data is used by the computing platform to perform intelligent computing.

3.  The method according to claim 2, wherein the information format protocol file comprises a packet description, the packet description comprises a packet identifier and at least one information description, and each of the at least one information description is used to identify one type of information corresponding to the packet identifier; and
    each of the at least one information description comprises at least one of the following information: an information identifier, an information name, an information length, an information start bit, a byte order, a data type mark, a precision factor, or a value range.

4.  The method according to claim 3, wherein the processing the first data by using the metamodel to obtain second data comprises:

    obtaining the packet identifier in the first data;
    obtaining the metamodel based on the packet identifier; and
    processing the first data by using the metamodel to obtain the second data.

5.  The method according to claim 3 or 4, wherein the automatically generating a metamodel of the sensor based on the information format protocol file of the sensor comprises:

    reading the packet description from the information format protocol file to obtain the at least one information description;
    for each of the at least one information description, determining, based on the information start bit in the information description, a first memory space of first information corresponding to the information description;
    determining a bit offset of the first information based on an initial byte of the first information, wherein the bit offset is used to determine a start bit of the first information in the first memory space;
    determining a content mask of the first information based on a placeholder length of the first information in the first memory space and the bit offset;
    obtaining, based on the first memory space, the placeholder length, and the content mask, a storage model corresponding to the information description; and
    determining the metamodel based on the storage model corresponding to each of the at least one information description.

6.  The method according to claim 5, wherein the method further comprises:

generating an information registration result based on a user request, wherein the information registration result comprises an information name; and

before the determining, based on the information start bit in the information description, a first memory space of first information corresponding to the information description, the method further comprises:

determining that an information name corresponding to the first information has been registered.

7. The method according to any one of claims 2 to 6, wherein the method further comprises:
storing the second data in a shared memory pool, wherein data in the shared memory pool is used by the computing platform to perform intelligent computing.

8. A data processing apparatus, comprising an obtaining unit and a processing unit, wherein

the obtaining unit is configured to obtain an information format protocol file of a sensor; and
the processing unit is configured to:

automatically generate a metamodel of the sensor based on the information format protocol file of the sensor, wherein the metamodel indicates information that needs to be extracted when data from the sensor is parsed; and
store the metamodel.

9. The apparatus according to claim 8, wherein

the obtaining unit is further configured to obtain first data from the sensor; and
the processing unit is further configured to process the first data by using the metamodel to obtain second data, wherein the second data is used by the computing platform to perform intelligent computing.

10. The apparatus according to claim 9, wherein the information format protocol file comprises a packet description, the packet description comprises a packet identifier and at least one information description, and each of the at least one information description is used to identify one type of information corresponding to the packet identifier; and
each of the at least one information description comprises at least one of the following information: an information identifier, an information name, an information length, an information start bit, a byte order, a data type mark, a precision factor, or a value range.

11. The apparatus according to claim 10, wherein the processing unit is configured to:

obtain the packet identifier in the first data;
obtain the metamodel based on the packet identifier; and
process the first data by using the metamodel to obtain the second data.

12. The apparatus according to claim 9 or 10, wherein the processing unit is configured to:

read the packet description from the information format protocol file to obtain the at least one information description;
for each of the at least one information description, determine, based on the information start bit in the information description, a first memory space of first information corresponding to the information description;
determine a bit offset of the first information based on an initial byte of the first information, wherein the bit offset is used to determine a start bit of the first information in the first memory space;
determine a content mask of the first information based on a placeholder length of the first information in the first memory space and the bit offset;
obtain, based on the first memory space, the placeholder length, and the content mask, a storage model corresponding to the information description; and
determine the metamodel based on the storage model corresponding to each of the at least one information description.

13. The apparatus according to claim 12, wherein the processing unit is further configured to:

generate an information registration result based on a user request, wherein the information registration result comprises an information name; and

determine that an information name corresponding to the first information has been registered.

14. The apparatus according to claims 9 to 13, wherein the processing unit is further configured to store the second data in a shared memory pool, wherein data in the shared memory pool is used by the computing platform to perform intelligent computing.

15. A data processing apparatus, comprising a processor and a memory, wherein the processor is coupled to the memory, and is configured to read and execute instructions in the memory, to perform the method according to any one of claims 1 to 7.

16. A computer-readable medium, wherein the computer-readable medium stores program code, and when the computer program code is run on a computer, the computer is enabled to perform the method according to any one of claims 1 to 7.

17. A chip, comprising a circuit, wherein the circuit is configured to perform the method according to any one of claims 1 to 7.

18. An intelligent driving device, comprising the data processing apparatus according to any one of claims 8 to 15 and one or more sensors.

19. The intelligent driving device according to claim 18, wherein the intelligent driving device is a vehicle.

100

S101: A programmer translates an information format protocol of a sensor

S102: The programmer determines locations of various types of information in the information format protocol, then compiles code, and writes the code into hardware

S103: The programmer associates the code with an upper-layer algorithm, so that the upper-layer algorithm can call the code

FIG. 1

Sensing system 220

Computing platform 230

| Processor 231 | Processor 232 | ... | Processor 23n |

Display apparatus 240

Intelligent driving device 200

FIG. 2

300

Sensing, planning, and control algorithm layer 320

Sensor signal → Actuator

Sensor abstraction layer 310

MDC

Ultrasonic sensor

Inertia measurement unit

Global navigation and positioning system

Radar

Lidar

FIG. 3

400

S401: Obtain an information format protocol file of a sensor

S402: Automatically generate a metamodel of the sensor based on the information format protocol file of the sensor, where the metamodel indicates information that needs to be extracted when data from the sensor is parsed

S403: Store the metamodel

FIG. 4

500

Obtain an information format
protocol file of a sensor deployed
on a computing platform
501

Determine
whether verification
of the information
format protocol
succeeds
502

No → Prompt a user with an
information format protocol
file error
503b

Yes

Obtain a packet description of
the information format
protocol file
503a

Invoke a method for
conversion between the
information format protocol
file and a metamodel
504

Generate a metamodel
corresponding to the sensor
505

Obtain an information name
required for user registration
and a corresponding callback
function
506

TO
FIG. 5B

FIG. 5A

CONT.
FROM
FIG. 5A

| Obtain sensor data | 507 |

| Input the sensor data to the metamodel for data processing | 508 |

| Perform function callback to refresh a shared memory pool | 509 |

| Access the shared memory pool, and read data processed by using the metamodel | 510 |

| Perform multi-sensor data fusion processing | 511 |

| Implement an autonomous driving function | 512 |

FIG. 5B

600

| Longitude | Latitude |
|---|---|

| Altitude |
|---|

| Roll angle significant bit | Roll angle |
|---|---|

| Roll angle | Pitch angle |
|---|---|

| Pitch angle | Azimuth angle |
|---|---|

| Azimuth angle | Linear velocity x |
|---|---|

| Linear velocity x | Linear velocity y |
|---|---|

| Linear velocity y | Linear velocity z |
|---|---|

| Linear velocity z | Satellite quantity |
|---|---|

...

FIG. 6

Metamodel

| | Sensor ECU | | | |
|---|---|---|---|---|

A sensor ECU may send a plurality of packets to mark collected data

| Packet 1 | Packet 2 | Packet 3 | ... |
|---|---|---|---|

A packet includes a plurality of pieces of information arranged in a data stream

| Packet ID | Packet ID | Packet ID | ... |
|---|---|---|---|

Each packet has a unique ID

| Information 1 | ... | Information 2 |
|---|---|---|

Information in each packet has a unique name

| Information name | Precision factor |
|---|---|

Multiply by the precision factor to represent floating-point information

A range offset represents a maximum range and a minimum range of information

| Range offset | Big-endian and little-endian, and sign bit |
|---|---|

Represent arrangement in a memory

| | Memory space 1 of the information in the packet | Memory space 2 of the information in the packet | Memory space 3 of the information in the packet |
|---|---|---|---|
| Used to find corresponding information in a packet | Memory space 1 of the information in the packet | Memory space 2 of the information in the packet | Memory space 3 of the information in the packet |
| Used to find an information start bit | Bit offset of the information in the memory space 1 | Bit offset of the information in the memory space 2 | Bit offset of the information in the memory space 3 |
| Used to calculate a length occupied by information | Placeholder length of the information in the memory space 1 | Placeholder length of the information in the memory space 2 | Placeholder length of the information in the memory space 3 |
| Used to extract corresponding information from a memory space | Content mask of the information in the memory space 1 | Content mask of the information in the memory space 2 | Content mask of the information in the memory space 3 |
| Used to splice information in various memory spaces into complete information | Splicing offset of the information in the memory space 1 and information in another memory space | Splicing offset of the information in the memory space 2 and information in another memory space | Splicing offset of the information in the memory space 3 and information in another memory space |

...   ...

FIG. 7

800

Read an information description
from an information format
protocol file of a sensor                    801

Initialize a metamodel                       802

Initialize an information
length to a remaining
length of information                        803

Determine
Yes          whether the information         No
is little-endian                             804

Perform memory                               Perform memory
location calculation         805a            location calculation         805b
from top to bottom                           from bottom to top
(a low address)                              (a high address)

Calculate a first memory
space of the information                     806

Calculate a bit offset
based on an initial byte                     807
of the information

TO                                           TO
FIG. 8B                                      FIG. 8B

FIG. 8A

CONT.
FROM
FIG. 8A

CONT.
FROM
FIG. 8A

Calculate a splicing
offset of the information — 808

Calculate a placeholder
length of the information — 809

Update the remaining
length of the information — 810

Calculate a content mask
based on the placeholder
length and the bit offset — 811

Perform shifting and splicing
on the first memory space, the
bit offset, the placeholder
length, and the content mask,
and update the metamodel — 812

Determine
whether the
remaining length
of the information is
greater
than 0 — 813

No → Determine that
metamodel updating is
completed — 814b

Yes

Calculate information of
a next memory space,
and continue to update
the metamodel — 814a

FIG. 8B

900

Obtain sensor data — 901

Determine whether a packet in a sensor has been input to a metamodel — 902

No → Record an alarm log — 903b

Yes

Find, based on a packet name, information corresponding to the packet name — 903a

Determine whether the information has been input to the metamodel — 904

No →

Yes

Determine whether memory access is not out of bounds — 905

No →

Yes

TO FIG. 9B

TO FIG. 9B

FIG. 9A

CONT.
FROM
FIG. 9A

CONT.
FROM
FIG. 9A

Access a memory, and
extract required
information based on a
memory mask — 906

Determine
whether the
information is an
initial byte — 907

Yes                                          No

Extract the
information, and
perform rightward
shifting and splicing on
the information — 908a

Extract the
information, and
perform leftward
shifting and splicing on
the information — 908b

Determine that the
information is spliced
with the extracted
information — 909

TO
FIG. 9C

TO
FIG. 9C

FIG. 9B

CONT.
FROM
FIG. 9B

CONT.
FROM
FIG. 9B

Shift to a next memory space —— 910

Determine whether metamodel access is completed —— 911

No

Yes

Determine that extraction of a bare value of the information is completed —— 912

Determine whether the information is unsigned —— 913

No

Perform conversion from unsigned to signed based on an information length —— 914b

Yes

Obtain an actual data value of the sensor according to Bare value×Precision factor+Range offset —— 914a

FIG. 9C

1000

| Obtain a packet name registered by a user and a corresponding callback function | 1001 |

↓

Determine that a packet has been imported into a metamodel — 1002

↓ Yes

| Read an information description in a packet description | 1003 |

↓

Determine that information has been imported into the metamodel — 1004

↓ Yes

| Assign a function pointer corresponding to the information | 1005 |

↓

| Obtain sensor data | 1006 |

↓

| Query the corresponding callback function based on an information name | 1007 |

↓

| Process the sensor data by using the metamodel to obtain an actual data value of a sensor | 1008 |

↓

| Refresh a shared memory pool | 1009 |

↓

| Perform multi-sensor data fusion processing | 1010 |

↓

| Extract a latest actual data value of the sensor from the shared memory pool | 1011 |

↓

| Implement an autonomous driving function | 1012 |

FIG. 10

Apparatus 1100

Obtaining unit 1110

Storage unit 1120

Processing unit 1130

FIG. 11

Apparatus 1200

Memory 1210

Processor 1220

Communication
interface 1230

FIG. 12

## INTERNATIONAL SEARCH REPORT

| | International application No. |
|---|---|
| | **PCT/CN2022/127044** |

### A. CLASSIFICATION OF SUBJECT MATTER

H04L 69/12(2022.01)i;  G06F 40/151(2020.01)i

According to International Patent Classification (IPC) or to both national classification and IPC

### B. FIELDS SEARCHED

Minimum documentation searched (classification system followed by classification symbols)

H04L; G06F

Documentation searched other than minimum documentation to the extent that such documents are included in the fields searched

Electronic data base consulted during the international search (name of data base and, where practicable, search terms used)

CNTXT; WPABSC; DWPI; VEN; VCN; CNKI: 元模型, 协议, 传感器, 格式, 报文, sensor, format, protocol, message

### C. DOCUMENTS CONSIDERED TO BE RELEVANT

| Category* | Citation of document, with indication, where appropriate, of the relevant passages | Relevant to claim No. |
|---|---|---|
| X | CN 114760369 A (SHUGUANG NETWORK TECHNOLOGY CO., LTD.) 15 July 2022 (2022-07-15)<br> description, paragraphs 59-66, and figure 1 | 1-19 |
| A | CN 106713357 A (NANJING RENGU SYSTEM INTEGRATION CO., LTD.) 24 May 2017 (2017-05-24)<br> entire document | 1-19 |
| A | CN 112511551 A (716TH RESEARCH INSTITUTE OF CHINA SHIPBUILDING INDUSTRY CORP. et al.) 16 March 2021 (2021-03-16)<br> entire document | 1-19 |
| A | CN 104809650 A (WUHAN UNIVERSITY) 29 July 2015 (2015-07-29)<br> entire document | 1-19 |
| A | US 2020082231 A1 (IBM) 12 March 2020 (2020-03-12)<br> entire document | 1-19 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 November 2022** | **22 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| :--- |
| **PCT/CN2022/127044** |

| Patent document cited in search report | | | Publication date (day/month/year) | Patent family member(s) | Publication date (day/month/year) |
| :--- | :--- | :--- | :--- | :--- | :--- |
| CN | 114760369 | A | 15 July 2022 | None | |
| CN | 106713357 | A | 24 May 2017 | None | |
| CN | 112511551 | A | 16 March 2021 | None | |
| CN | 104809650 | A | 29 July 2015 | None | |
| US | 2020082231 | A1 | 12 March 2020 | None | |

Form PCT/ISA/210 (patent family annex) (January 2015)